# EUROPEAN PATENT APPLICATION

(11) **EP 4 654 179 A1**
(43) Date of publication of application: **26.11.2025**
(21) Application number: 24857895.7
(22) Date of filing: 30.05.2024
(51) Int. Cl.: G09G 3/34, H04N 1/407, G09G 3/36, G06T 5/00

(54) **IMAGE DISPLAY METHOD AND ELECTRONIC DEVICE**

(30) Priority: 29.08.2023 CN 202311114974; 11.09.2023 CN 202311174552
(71) Applicant: Huawei Technologies Co., Ltd., Shenzhen, Guangdong 518129 (CN)
(72) Inventor: ZHOU, Liu, Shenzhen, Guangdong 518129 (CN); AI, Jinqin, Shenzhen, Guangdong 518129 (CN); WEN, Jinsong, Shenzhen, Guangdong 518129 (CN); ZHOU, Yang, Shenzhen, Guangdong 518129 (CN); LIU, Haixiao, Shenzhen, Guangdong 518129 (CN)
(74) Representative: MERH-IP Matias Erny Reichl Hoffmann Patentanwälte PartG mbB
(86) International application number: PCT/CN2024/096441
(87) International publication number: WO 2025/044350

(57) **Abstract**

An image display method and an electronic device are provided, to improve a dynamic range of image display. After determining a to-be-displayed first image, the electronic device determines a highlight area of the first image and backlight brightness information of a display (194) based on image content or a histogram of the first image, reduces brightness of a non-highlight area of the first image and keeps brightness of the highlight area unchanged to obtain a second image, adjusts backlight brightness of the display (194) based on the backlight brightness information, and then displays the second image on the display (194).

## Description

### CROSS-REFERENCE TO RELATED APPLICATIONS

This application claims priorities to Chinese Patent Application No. 202311114974.8, filed with the China National Intellectual Property Administration on August 29, 2023 and entitled "IMAGE DISPLAY METHOD AND ELECTRONIC DEVICE", and to Chinese Patent Application No. 202311174552.X, filed with the China National Intellectual Property Administration on September 11, 2023 and entitled "IMAGE DISPLAY METHOD AND ELECTRONIC DEVICE", both of which are incorporated herein by reference in their entireties.

### TECHNICAL FIELD

This application relates to the field of terminal technologies, and in particular, to an image display method and an electronic device.

### BACKGROUND

Human eyes have a large dynamic range (10⁻⁶ to 10⁻⁸), and can sense a high-dynamic range (High-Dynamic Range, HDR for short) of a real world. A brightness range that a display can display is smaller than that sensed by the human eyes. Consequently, the display cannot completely restore the high-dynamic range of the real world. Therefore, how to improve a dynamic range for image display is a problem that needs to be studied.

### SUMMARY

Embodiments of this application provide an image display method and an electronic device, to help improve and determine a dynamic range for image display.

According to a first aspect, an image display method is provided, and is applied to an electronic device. The method includes: determining a to-be-displayed first image; determining a highlight area of the first image and backlight brightness information of a display based on image content of the first image or a histogram of the first image, where the highlight area is an area that is of the first image and whose brightness value is greater than a first threshold; reducing brightness of a non-highlight area of the first image and keeping brightness of the highlight area unchanged, to obtain a second image, where the non-highlight area is an area of the first image other than the highlight area; adjusting backlight brightness of the display based on the backlight brightness information; and displaying the second image on the display.

In this embodiment of this application, before displaying an image, a mobile phone first darkens a non-highlight area of the image (for example, reduces a grayscale value of a pixel in the non-highlight area), and keeps brightness of a highlight area unchanged (that is, keeps a grayscale value of a pixel in the highlight area unchanged), to obtain a new image. Then, the mobile phone adjusts backlight brightness of a display based on backlight brightness information, and displays the new image on the display whose backlight brightness is adjusted. Due to a function of the backlight brightness of the display, when the new image is displayed on the display, a highlight area of the new image is brighter, and the backlight brightness of the display can compensate for darkening of a non-highlight area, so that the non-highlight area is not excessively dark. In this case, a brightness contrast between the highlight area and the non-highlight area is enhanced, that is, a dynamic range of image display is improved.

In a possible design, determining the highlight area of the first image based on the image content of the first image includes: determining, based on the image content of the first image, whether the first image includes a preset object; and if the first image includes the preset object, determining that an area in which the preset object is located on the first image is the highlight area.

In this embodiment of this application, the electronic device can determine a highlight area of an image in an image semantic recognition manner. For example, an area in which a light source is located on the image is a highlight area. In this way, before displaying the image, a mobile phone first darkens an area in which the light source is not located on the image (for example, reduces a grayscale value of a pixel in the area in which the light source is not located), and keeps brightness of the area in which the light source is located unchanged, to obtain a new image. Then, the mobile phone adjusts backlight brightness of a display based on backlight brightness information, and displays the new image on the display whose backlight brightness is adjusted. Due to a function of the backlight brightness of the display, when the new image is displayed on the display, an area in which a light source is located on the new image is brighter, and the backlight brightness of the display can compensate for darkening of an area in which the light source is not located, so that the area in which the light source is not located is not excessively dark. In this case, a brightness contrast between the area in which the light source is located and the area in which the light source is not located is enhanced, that is, a dynamic range of image display is improved.

In a possible design, determining the highlight area of the first image based on the image content of the first image includes: running a first algorithm model by using the first image as an input parameter, to obtain a highlight map of the first image, where the first algorithm model is configured to: when recognizing that the first image includes a preset object, adjust a pixel value of a pixel in an area in which the preset object is located on the first image to a first pixel value, and adjust a pixel value of a pixel in another area to a second pixel value, to obtain the highlight map, where the first pixel value is less than the second pixel value; and determining the highlight area of the first image based on the highlight map.

In this embodiment of this application, the electronic device can determine a highlight area of an image by using a highlight map. This manner is convenient and efficient, that is, the highlight area can be determined at a high speed.

In a possible design, determining the highlight area of the first image based on the highlight map includes: determining a first pixel whose pixel value is the first pixel value in the highlight map; determining a second pixel in the first image based on the first pixel, where a location of the second pixel in the first image is the same as a location of the first pixel in the highlight map; and determining an area in which the second pixel is located as the highlight area.

In this embodiment of this application, the electronic device can determine a highlight area of an image by using a highlight map. This has high efficiency.

In a possible design, determining the highlight area of the first image based on the histogram of the first image includes: dividing the first image into N areas, and determining a local histogram of each of the N areas, where N is a positive integer; determining M areas in the N areas based on the local histogram, where M is a positive integer less than or equal to N, and each of the M areas satisfies that an average pixel value is greater than a second threshold and/or a quantity of pixels whose pixel values are greater than the second threshold exceeds a preset quantity; and determining the M areas as the highlight area.

In this embodiment of this application, the electronic device can determine the highlight area of the first image based on the histogram of the first image. The highlight area determined in this manner is accurate.

In a possible design, before determining the M areas as the highlight area, the method further includes: determining K areas in the M areas based on a global histogram of the first image, where K is a positive integer less than or equal to M, each of the K areas satisfies that a ratio of S1 to S2 is greater than a first ratio, S1 is a quantity of pixels whose pixel values are greater than the second threshold in each area, and S2 is a quantity of all pixels whose pixel values are greater than the second threshold in the first image; and determining the M areas as the highlight area includes: determining the K areas as the highlight area of the first image.

In this embodiment of this application, the electronic device can determine the highlight area of the first image based on a global histogram and a local histogram of the first image, to improve accuracy of the determined highlight area.

In a possible design, the first image is a high dynamic range image, and a value of the second threshold is a first value; or the first image is a low dynamic range image, the value of the second threshold is a second value, and the first value is less than the second value.

In this embodiment of this application, because a brightness difference of an object in a low dynamic range image is not obvious, a highlight area can be accurately determined only when a value of the second threshold is large. However, due to a large brightness difference in a high dynamic range image, a background is generally dark. In this case, a highlight area can be determined without a large value of the second threshold. In this manner, highlight areas of various images can be determined accurately.

In a possible design, the first image is a high dynamic range image, and a value of the first ratio is a third value; or the first image is a low dynamic range image, a value of the first ratio is a fourth value, and the third value is less than the fourth value.

In this embodiment of this application, because a quantity of pixels in a highlight area (for example, an area in which a light source is located) of a high dynamic range image is small, for example, accounts for 5% to 10% of a total quantity of pixels in the entire image, the first ratio is set to a small value. However, because a quantity of pixels in a highlight area (for example, an area in which a cloud or snow scene is located) of a low dynamic range image is large, for example, accounts for 50% to 60% of a total quantity of pixels in the entire image, the first ratio is set to a large value. In this manner, highlight areas of various images can be determined accurately.

In a possible design, determining the backlight brightness information of the display based on the image content of the first image includes: determining, based on the image content of the first image, an environment in which the first image is located; and determining the backlight brightness information based on the environment.

In this embodiment of this application, the electronic device determines the backlight brightness information of the display based on the image content of the first image. The backlight brightness information determined in this manner is consistent with the environment in which the image is located.

In a possible design, the backlight brightness information includes a backlight brightness multiplier; and when the environment is an outdoor environment or a daytime environment, determining the backlight brightness multiplier as a first multiplier; or when the environment is an indoor environment or a nighttime environment, determining the backlight brightness multiplier as a second multiplier, where the first multiplier is greater than the second multiplier.

In this embodiment of this application, if an environment in which an image is located is a nighttime environment and details of the image are unclear, when brightness of a non-highlight area is reduced too much, more details are lost. In this case, the brightness of the non-highlight area is reduced less, and a corresponding backlight brightness multiplier may be smaller. If an environment in which an image is located is a daytime environment, because the image has many details, when brightness of a non-highlight area is reduced much, details are not likely to be lost. In this case, if the brightness of the non-highlight area is reduced less, a corresponding backlight brightness multiplier may be larger. Therefore, if an image is during the nighttime, a corresponding backlight brightness multiplier is small; or if an image is during the daytime, a corresponding backlight brightness multiplier is large.

In a possible design, determining the backlight brightness information of the display based on the histogram of the first image includes: determining, based on the global histogram of the first image, a second ratio of a quantity of pixels whose pixel values are less than a third threshold in the first image to a total quantity of pixels in the first image, and determining the backlight brightness information based on the second ratio; or determining, based on the global histogram of the first image, a third ratio of a quantity of pixels whose pixel values are greater than a fourth threshold in the first image to the total quantity of pixels in the first image, and determining the backlight brightness information based on the third ratio.

In this embodiment of this application, the electronic device can determine the backlight brightness information of the display based on the histogram of the first image. The backlight brightness information determined in this manner is accurate.

In a possible design, before reducing the brightness of the non-highlight area of the first image, the method further includes: determining a pixel change value Δ based on the backlight brightness information; and subtracting the pixel change value Δ from a pixel value of each pixel in the non-highlight area.

In this embodiment of this application, that the electronic device reduces the brightness of the non-highlight area of the image means that the electronic device reduces the pixel value of the pixel in the non-highlight area. After reducing the brightness of the non-highlight area, the electronic device adjusts the backlight brightness of the display to compensate for reduced brightness, to avoid affecting user experience due to excessively low brightness of a non-highlight area present when an image is displayed on the display.

In a possible design, determining the pixel change value Δ based on the backlight brightness information includes: determining, based on the backlight brightness information and a correspondence between the backlight brightness information and a pixel value, a pixel value corresponding to the backlight brightness information as a target pixel value, where a difference between the target pixel value and a current pixel value of each pixel in the non-highlight area is the pixel change value Δ.

In a possible design, before determining the highlight area of the first image and the backlight brightness information of the display based on the image content of the first image, the method further includes: determining that the first image is a third-party image, where the third-party image is not an image locally shot by the electronic device.

In this embodiment of this application, when the electronic device shoots an image by using a local camera, the electronic device stores parameters used for shooting the image. The parameters include exposure information, an f-number, a flash, a lens focal length, a depth of field, and a quantity of shutter times. These parameters form Exif information and are stored in the electronic device. Therefore, for a locally shot image, the electronic device may determine a highlight area of the image and backlight brightness information based on Exif information of the image. For a third-party image, because the third-party image is not locally shot, the mobile phone does not have Exif information corresponding to the third-party image. Therefore, a highlight area of the third-party image and backlight brightness information are determined based on image content or a histogram. Therefore, the technical solutions provided in this embodiment of this application are applicable to a third-party image. To be specific, when the third-party image is displayed by using the image display method provided in this embodiment of this application, a dynamic range can be increased.

In a possible design, determining that the first image is a third-party image includes: reading a flag bit in a first file, and determining, based on the flag bit, that the first image is a third-party image, where the first file is a file obtained by storing the first image by the electronic device based on a first image format, and the flag bit indicates that the first image is a third-party image or a locally shot image.

A JPEG format is used as an example. In this embodiment of this application, after the electronic device stores an image as a file in the JPEG format, the file includes a flag bit (flag). The flag bit indicates whether the image is a locally shot image or a third-party image. Therefore, the electronic device can determine, by using the flag bit, whether an image is a locally shot image or a third-party image. This is convenient.

In a possible design, before determining the highlight area of the first image and the backlight brightness information of the display based on the image content of the first image or the histogram of the first image, the method further includes: determining, based on the image content of the first image, that the first image is a photographic image, where the photographic image is an image that includes at least one of a landscape, a person, and an animal.

In this embodiment of this application, because a user has a low aesthetic requirement for a non-photographic image (for example, a WeChat chat screenshot), the image display method provided in this embodiment of this application is not used for the non-photographic image, and the image display method provided in this embodiment of this application may be used for a photographic image to indicate a dynamic range.

In a possible design, the method further includes: when determining, based on the image content of the first image, that the first image is not a photographic image, displaying the first image on the display.

In this embodiment of this application, because the user has a low aesthetic requirement for a non-photographic image (for example, a WeChat chat screenshot), if a to-be-displayed image is a non-photographic image, the image is directly displayed, and the image display method provided in this embodiment of this application does not need to be performed.

In a possible design, the method further includes: storing the highlight map of the first image and the backlight brightness information.

In this embodiment of this application, after determining the highlight map of the first image and the backlight brightness information, the electronic device may store the highlight map and the backlight brightness information. Next time the electronic device detects that the user wants to open the first image, the electronic device reads the highlight map and the backlight brightness information, without a need to determine the highlight area and the backlight brightness information based on the image content of the first image and/or the histogram of the first image. Therefore, efficiency is high.

In a possible design, the method further includes: canceling display of the second image on the display in response to a first operation; reading the highlight map and the backlight brightness information when receiving an operation used to open the first image again; determining the highlight area of the first image based on the highlight map; reducing the brightness of the non-highlight area of the first image and keeping the brightness of the highlight area unchanged, to obtain a third image, where the non-highlight area is the area of the first image other than the highlight area; adjusting the backlight brightness of the display based on the backlight brightness information; and displaying the third image on the display.

In this embodiment of this application, after determining the highlight map of the first image and the backlight brightness information, the electronic device may store the highlight map and the backlight brightness information. Next time the electronic device detects that the user wants to open the first image, the electronic device reads the highlight map and the backlight brightness information, without a need to determine the highlight area and the backlight brightness information based on the image content of the first image and/or the histogram of the first image. Therefore, efficiency is high.

In a possible design, before determining the highlight area of the first image and the backlight brightness information of the display based on the image content of the first image or the histogram of the first image, the method further includes: determining that the highlight map of the first image and the backlight brightness information do not exist in the electronic device, where the highlight map is a grayscale image of the first image, and a pixel whose pixel value is within a first preset range in the grayscale image corresponds to a pixel in the highlight area of the first image.

In this embodiment of this application, after determining the to-be-displayed first image, the electronic device may first determine whether the highlight map and the backlight brightness information are stored. If the highlight map and the backlight brightness information are not stored, the electronic device determines the highlight area and the backlight brightness information based on the image content of the first image and/or the histogram of the first image. If the highlight map and the backlight brightness information are stored, the electronic device reads the highlight map and the backlight brightness information. Therefore, efficiency is high.

A second aspect further provides an electronic device. The electronic device includes:
a processor, a memory, and one or more programs.

The one or more programs are stored in the memory. The one or more programs include instructions. When the instructions are executed by the processor, the electronic device is enabled to perform the steps of the method according to the first aspect.

A third aspect provides a computer-readable storage medium. The computer-readable storage medium is configured to store a computer program. When the computer program is run on a computer, the computer is enabled to perform the method according to the first aspect.

A fourth aspect provides a computer program product, including a computer program. When the computer program is run on a computer, the computer is enabled to perform the method according to the first aspect.

A fifth aspect further provides a chip. The chip is coupled to a memory in an electronic device, and is configured to: invoke a computer program stored in the memory and perform the technical solutions according to the first aspect of embodiments of this application. In embodiments of this application, "coupling" means that two components are directly or indirectly combined with each other.

For technical effects that can be achieved in the second aspect to the fifth aspect, refer to descriptions of the technical effects that can be achieved in the corresponding design solutions in the first aspect. Details are not described herein again in this application.

### BRIEF DESCRIPTION OF DRAWINGS

FIG. 1A is a diagram of a hardware structure of an electronic device according to an embodiment of this application;
FIG. 1B is a diagram of a software structure of an electronic device according to an embodiment of this application;
FIG. 2A and FIG. 2B are a schematic flowchart of an image display method and an electronic device according to an embodiment of this application;
FIG. 3 is a diagram of a display interface of a mobile phone according to an embodiment of this application;
FIG. 4 is a diagram of a first image and a highlight map according to an embodiment of this application; and
FIG. 5 is a diagram of a structure of an electronic device according to an embodiment of this application.

### DESCRIPTION OF EMBODIMENTS

The following describes some terms in embodiments of this application, to facilitate understanding of a person skilled in the art.

In embodiments of this application, "at least one" includes one or more, and "a plurality of" means two or more. In addition, it should be understood that, in descriptions of this specification, terms such as "first" and "second" are merely used for distinguishing and description, but should not be understood as indicating or implying relative importance, or should not be understood as indicating or implying a sequence. For example, a first moment and a second moment do not represent importance degrees of the first moment and the second moment or a sequence of the first moment and the second moment, and are merely used for differentiated description. The term "and/or" in embodiments of this application describes only an association relationship and represents that three relationships may exist. For example, A and/or B may represent the following three cases: Only A exists, both A and B exist, and only B exists. In addition, the character "/" in this specification generally indicates an "or" relationship between the associated objects.

Reference to "an embodiment", "some embodiments", or the like described in this specification means that specific features, structures, or characteristics described with reference to the embodiment are included in one or more embodiments of this specification. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

According to the context, the term "when" or "after" used in the specification may be interpreted as a meaning of "if" or "after" or "in response to determining" or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

An image display method provided in embodiments of this application is applicable to an electronic device. The electronic device may have a display. For example, the electronic device may be a portable electronic device such as a mobile phone, a tablet computer, or a notebook computer, or may be a wearable device such as a watch or a band, or may be a virtual reality (Virtual Reality, VR) device, an augmented reality (Augmented Reality, AR) device, a mixed reality (Mixed Reality, MR) device, or the like. In conclusion, a specific type of the electronic device is not limited in embodiments of this application. For ease of description, an example in which the electronic device is a mobile phone is mainly used in this specification.

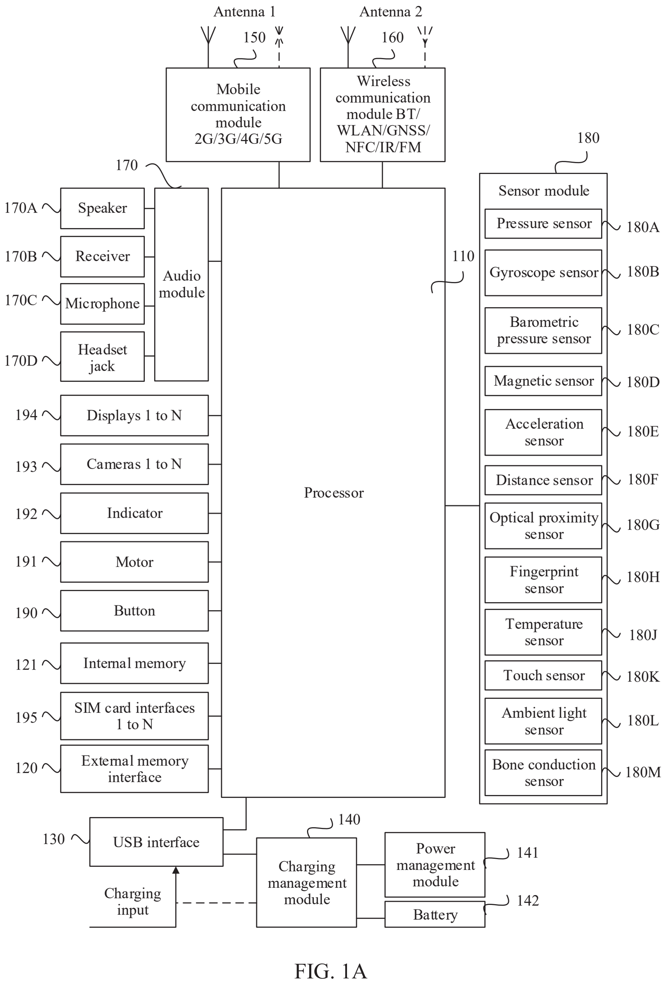

FIG. 1A is a diagram of a hardware structure of an electronic device. The electronic device may be, for example, a mobile phone. As shown in FIG. 1A, the electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device. The controller may generate an operation control signal based on instruction operation code and a time sequence signal, to complete control of instruction reading and instruction execution. A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

The processor 110 may perform a procedure of the image display method provided in embodiments of this application. For example, the processor 110 may determine a to-be-displayed first image, and may further determine whether the first image is a third-party image. The third-party image is not a locally shot image, for example, may include an image received from another device (for example, a mobile phone) by using the wireless communication module 160, an image downloaded from a network, or a local screenshot image of the electronic device. After determining that the to-be-displayed first image is a third-party image, the processor 110 determines a highlight area of the first image and backlight brightness information of the display 194 based on image content of the first image and/or a histogram of the first image. Then, the processor 110 reduces brightness of a non-highlight area of the first image and keeps brightness of the highlight area unchanged, to obtain a second image. In addition, the processor 110 adjusts backlight brightness of the display 194 based on the backlight brightness information, and displays the second image on the display 194. In this way, when the second image is displayed on the display 194, a highlight area of the second image is brighter due to a function of the backlight brightness of the display, and the backlight brightness of the display compensates for darkening of the non-highlight area, so that the non-highlight area is not excessively dark. Therefore, a brightness contrast between the highlight area and the non-highlight area is enhanced, that is, a dynamic range of image display is improved. A specific implementation process is described below.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device. The processor 110 communicates with the display 194 through the DSI interface, to implement a display function of the electronic device.

The GPIO interface may be configured by software. The GPIO interface may be configured for a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device, or may be used for data transmission between the electronic device and a peripheral device, or may be configured to connect to a headset for playing an audio through the headset. The interface may be further configured to connect to another electronic device, for example, an AR device.

It may be understood that an interface connection relationship between the modules illustrated in this embodiment of this application is merely an example for description, and does not constitute a limitation on the structure of the electronic device. In some other embodiments of this application, the electronic device may alternatively use an interface connection manner different from that in the foregoing embodiment, or use a combination of a plurality of interface connection manners.

A wireless communication function of the electronic device may be implemented through the antenna 1, the antenna 2, the mobile communication module 150, the wireless communication module 160, the modem processor, the baseband processor, and the like. The antenna 1 and the antenna 2 are configured to: transmit and receive an electromagnetic wave signal. Each antenna of the electronic device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules in the mobile communication module 150 may be disposed in a same component as at least some modules of the processor 110.

The wireless communication module 160 may provide a wireless communication solution that is applied to the electronic device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology.

The display 194 is configured to display a display interface of an application, and the like. The display 194 includes a display panel. In some embodiments, the electronic device may include one or more displays 194. In this embodiment of this application, the backlight brightness of the display 194 may be adjusted, for example, adjusted based on the backlight brightness information. It is assumed that the backlight brightness information is a backlight brightness multiplier, for example, x1 or x2. A larger backlight brightness multiplier indicates larger backlight brightness.

The electronic device may implement a photographing function by using the ISP, the camera 193, the video codec, the GPU, the display 194, the application processor, and the like. The ISP is configured to process data fed back by the camera 193.

The internal memory 121 may be configured to store computer-executable program code. The executable program code includes instructions. The processor 110 runs the instructions stored in the internal memory 121, to perform various function applications and data processing of the electronic device. The internal memory 121 may include a program storage area and a data storage area. The program storage area may store an operating system, software code of at least one application, and the like. The data storage area may store data (for example, an image or a video) and the like that are during use of the electronic device. In addition, the internal memory 121 may include a high-speed random access memory, or may include a nonvolatile memory, for example, at least one magnetic disk storage device, a flash storage device, or a universal flash storage.

The external memory interface 120 may be configured to connect to an external memory card, for example, a micro SD card, to extend a storage capability of the electronic device. The external memory card communicates with the processor 110 through the external memory interface 120, to implement a data storage function. For example, files such as pictures and videos are stored in the external memory card.

The electronic device may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to: encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device may listen to music by using one or more speakers 170A, or may be used in a speaker scenario, for example, answering a hands-free call.

The receiver 170B, also referred to as an "earpiece", is configured to convert an audio electrical signal into a sound signal, and there may be one or more receivers 170B. When a call is answered or audio information is listened to by using the electronic device, the receiver 170B may be put close to a human ear to listen to a voice.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194.

The gyroscope sensor 180B may be configured to determine a moving posture of the electronic device. In some embodiments, an angular velocity of the electronic device around three axes (that is, axes x, y, and z) may be determined through the gyroscope sensor 180B. The gyroscope sensor 180B may be configured to implement image stabilization during photographing.

The barometric pressure sensor 180C is configured to measure barometric pressure. In some embodiments, the electronic device calculates an altitude based on a barometric pressure value measured by the barometric pressure sensor 180C, to assist in positioning and navigation.

The magnetic sensor 180D includes a Hall effect sensor. For example, the electronic device may detect opening and closing of a flip cover by using the magnetic sensor 180D.

The acceleration sensor 180E may detect accelerations in various directions (usually on three axes) of the electronic device. When the electronic device is still, a magnitude and a direction of gravity may be detected.

The distance sensor 180F is configured to measure a distance. The electronic device may measure the distance in an infrared manner or a laser manner.

The optical proximity sensor 180G may include, for example, a light-emitting diode (LED) and an optical detector, for example, a photodiode. The light-emitting diode may be an infrared light emitting diode. The electronic device emits infrared light through the light-emitting diode. The electronic device detects infrared reflected light from a nearby object through the photodiode. When sufficient reflected light is detected, the electronic device may determine that there is an object near the electronic device. When insufficient reflected light is detected, the electronic device may determine that there is no object near the electronic device.

The ambient light sensor 180L is configured to sense ambient light brightness. The electronic device may adaptively adjust brightness of the display 194 based on the sensed ambient light brightness.

The fingerprint sensor 180H is configured to collect a fingerprint.

The temperature sensor 180J is configured to detect a temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event.

The bone conduction sensor 180M may obtain a vibration signal. In some embodiments, the bone conduction sensor 180M may obtain a vibration signal of a vibration bone of a human vocal-cord part.

The button 190 includes a power button, a volume button, and the like. The button 190 may be a mechanical button, or may be a touch button. The electronic device may receive a button input, and generate a button signal input related to a user setting and function control of the electronic device. The motor 191 may generate a vibration prompt. The motor 191 may be configured to provide an incoming call vibration prompt and a touch vibration feedback. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the electronic device.

It may be understood that components shown in FIG. 1A do not constitute a specific limitation on the electronic device. The electronic device in this embodiment of this application may include more or fewer components than those in FIG. 1A. In addition, a combination/connection relationship between the components in FIG. 1A may further be adjusted and modified.

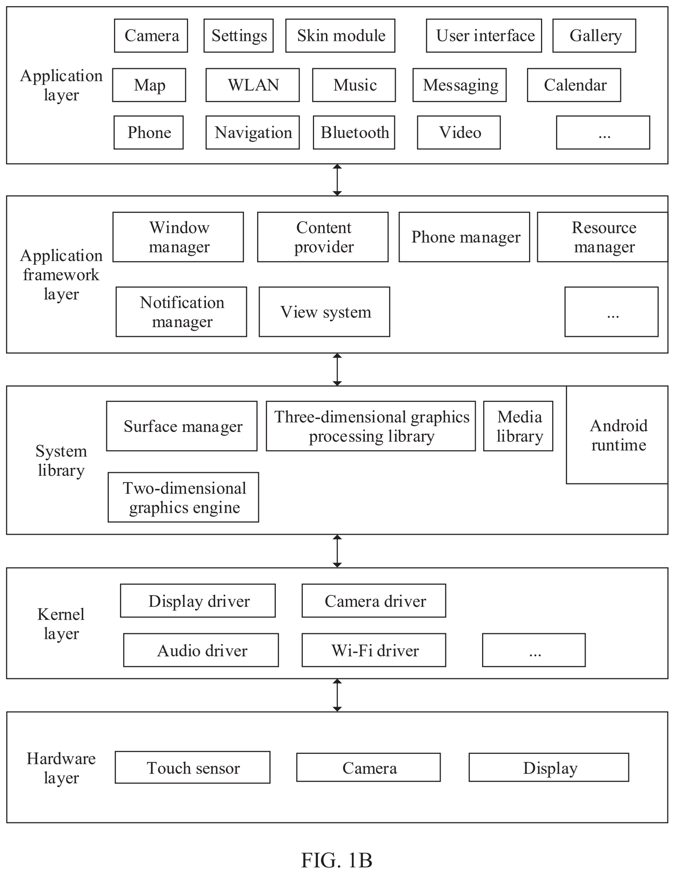

FIG. 1B is a diagram of a software structure of an electronic device according to an embodiment of this application. The electronic device may be, for example, a mobile phone. As shown in FIG. 1B, the software structure of the electronic device may be a layered structure. In the layered architecture, software is divided into several layers, and each layer has a clear role and task. The layers communicate with each other through a software interface. The layered architecture may be, for example, an event-driven architecture, a microkernel architecture, a microservice architecture, or a cloud architecture. In embodiments of this application, an Android^{®} system of the layered architecture is used as an example to describe the software structure of the electronic device. In some embodiments, the Android^{®} system is divided into five layers: an application layer, an application framework layer, an Android runtime (Android runtime) and system library, a kernel layer, and a hardware layer from top to bottom.

The application layer may include a series of application packages. As shown in FIG. 1B, the application packages may include applications such as Camera, Gallery, Calendar, Phone, Map, Navigation, WLAN, Bluetooth, Music, Video, and Messaging.

The application framework layer provides an application programming interface (application programming interface, API) and a programming framework for an application at the application layer. The application framework layer includes some predefined functions. As shown in FIG. 1B, the application framework layer may include a window manager, a content provider, a view system, a phone manager, a resource manager, a notification manager, and the like. The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like. The view system includes visual controls such as a control for displaying a text and a control for displaying an image. The view system may be used to construct an application. A display interface may include one or more views. For example, a display interface including an SMS message notification icon may include a text display view and an image display view. The phone manager is configured to provide a communication function of the electronic device, for example, management of a call status (including answering, declining, or the like). The resource manager provides various resources such as a localized character string, an icon, an image, a layout file, and a video file for an application. The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device vibrates, or an indicator blinks.

The Android runtime includes a core library and a virtual machine. The Android runtime is responsible for scheduling and management of the Android system. The core library includes two parts: a function that needs to be called in Java language and a core library of Android. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection. The system library may include a plurality of functional modules, for example, a surface manager (surface manager), a media library (Media Library), a three-dimensional graphics processing library (for example, OpenGL ES), and a two-dimensional graphics engine (for example, SGL). The surface manager is configured to manage a display subsystem and provide fusion of 2D and 3D layers for a plurality of applications. The media library supports play and recording in a plurality of commonly used audio and video formats, and static image files. The media library may support a plurality of audio and video encoding formats, for example, MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The kernel layer is a layer between hardware and software. The kernel layer includes at least a display driver, a camera driver, an audio driver, and a sensor driver.

The hardware layer includes various hardware, for example, a Wi-Fi transceiver, a camera, and a display.

It may be understood that the software structure shown in FIG. 1B does not constitute a specific limitation on the software structure of the electronic device. The software structure of the electronic device in this embodiment this application may include more or fewer modules than those in FIG. 1B, for example, more or fewer layers than those in FIG. 1B, or a layer includes more or fewer modules than those in FIG. 1B. In addition, a combination/connection relationship between the modules in FIG. 1B may further be adjusted and modified.

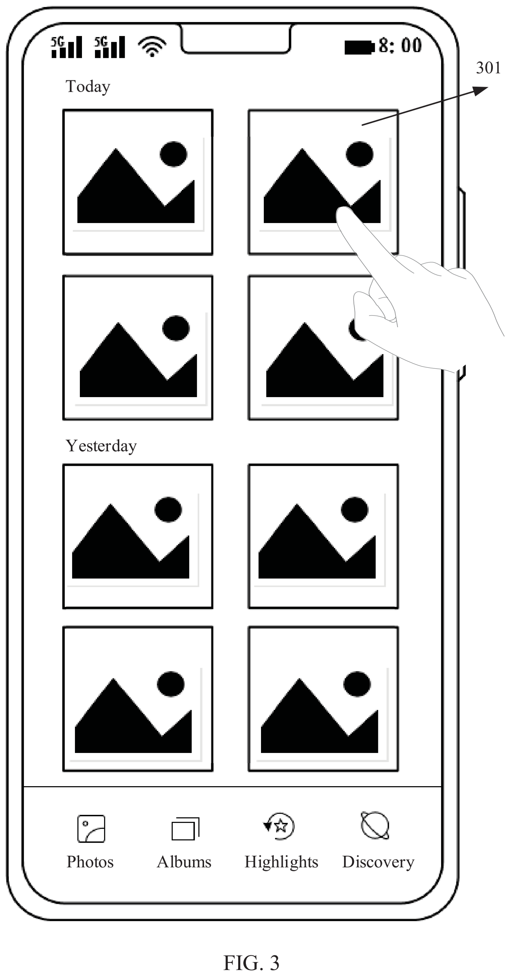

In FIG. 1B, the application framework layer or the system library may be used to perform a procedure of the image display method provided in embodiments of this application. Herein, that the application framework layer is used to perform the procedure is mainly used as an example. When a touch sensor (namely, the touch sensor 180K in FIG. 1A) at the hardware layer receives a touch operation, a corresponding hardware interrupt is sent to the kernel layer. The kernel layer processes the touch operation into an input event (including information such as touch coordinates and a timestamp of the touch operation). The application framework layer obtains the input event from the kernel layer, recognizes an object (for example, a control or an icon) corresponding to the input event, and distributes the input event to a corresponding application. For example, the touch operation is a touch tap operation, and an object corresponding to the tap operation is a thumbnail (refer to FIG. 3 below) in the gallery application. In this case, the input event is distributed to a gallery application at the application layer. The gallery application invokes an interface of the application framework layer, so that the application framework layer determines whether a first image (an image corresponding to the tapped thumbnail) is a third-party image. If the first image is a third-party image, the application framework layer determines a highlight area of the first image and backlight brightness information of the display based on image content of the first image and/or a histogram of the first image. After determining the highlight area, the application framework layer reduces brightness of a non-highlight area of the first image and keeps brightness of the highlight area unchanged, to obtain a second image. In addition, the application framework layer invokes a display (namely, the display 194 in FIG. 1A) at the hardware layer, adjusts backlight brightness of the display based on the backlight brightness information, and then displays the second image on the display. In this way, when the second image is displayed on the display, a highlight area of the second image is brighter due to a function of the backlight brightness of the display, and the backlight brightness of the display compensates for darkening of the non-highlight area, so that the non-highlight area is not excessively dark. Therefore, a brightness contrast between the highlight area and the non-highlight area is enhanced, that is, a dynamic range of image display is improved.

**The following uses a mobile phone as an example to describe, with reference to the accompanying drawings, an image display method provided in embodiments of this application.**

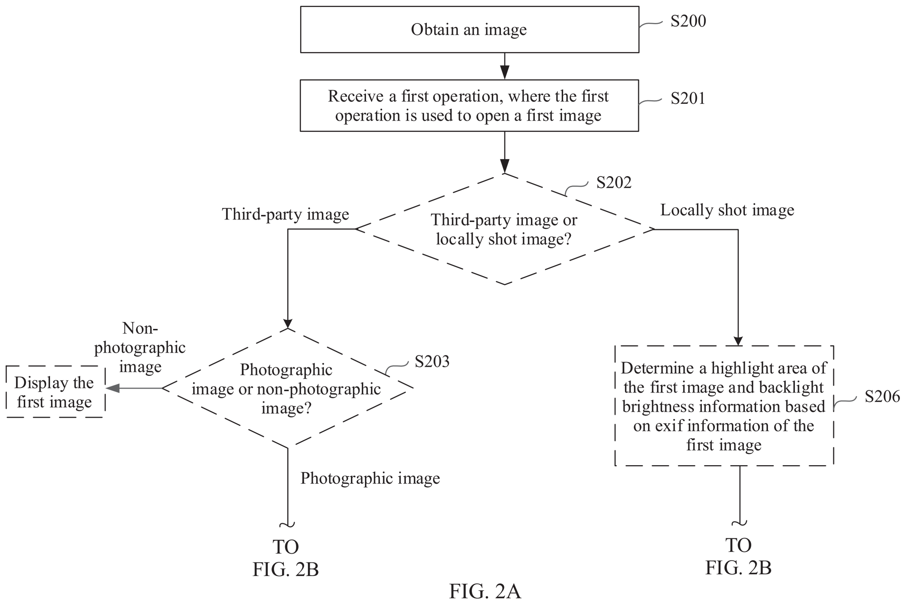

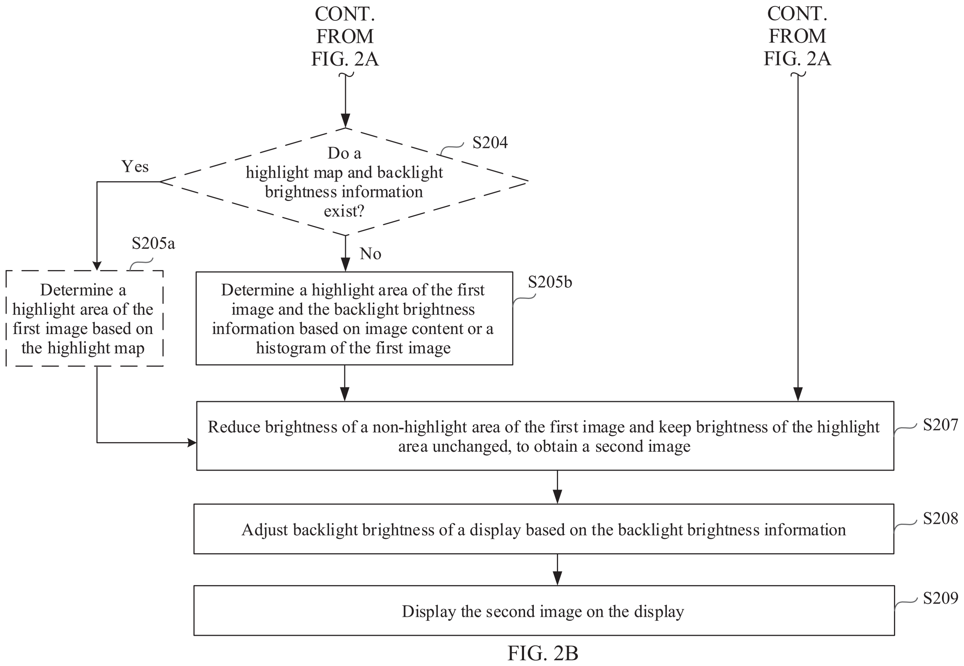

FIG. 2A and FIG. 2B are a schematic flowchart of an image display method according to an embodiment of this application. The method may be performed by a mobile phone, and the mobile phone may have a hardware structure in FIG. 1A and/or a software structure in FIG. 1B. As shown in FIG. 2A and FIG. 2B, the method includes the following steps.

S200: Obtain an image.

The mobile phone obtains an image in a plurality of manners, for example, by shooting an image by using a local camera, downloading an image from a network, receiving an image from another device, or taking a screenshot. In this specification, an image not shot by the local camera is referred to as a third-party image. For example, an image downloaded by the mobile phone from a network, an image received by the mobile phone from another device, or an image obtained by taking a screenshot is a third-party image.

It should be understood that after obtaining the image, the mobile phone may store the image in a gallery application in the mobile phone. Generally, the mobile phone stores the image as a file in an image format. The image format is, for example, a joint photographic experts group (Joint Photographic Experts Group, JPEG) format, a portable network graphics (Portable Network Graphics, PNG) format, or the like. The JPEG format is used as an example. After the mobile phone stores the image as a file in the JPEG format, an extension of the file is .jpeg or .jpg.

The JPEG format is still used as an example. In this embodiment of this application, after the mobile phone stores the image as the file in the JPEG format, the file includes a flag (flag) bit. The flag bit indicates whether the image is a locally shot image or a third-party image. The flag bit may be represented in binary, for example, 00 or 01. When the flag bit is 00, it indicates that the image is a third-party image. When the flag bit is 01, it indicates that the image is a locally shot image. In a possible implementation, after shooting an image by using the local camera, the mobile phone stores the image as a file in the JPEG format, and sets a flag bit in the file to 01, to indicate that the image is a locally shot image. After obtaining an image (namely, a third-party image) by downloading from a network, receiving from another device, or taking a screenshot, the mobile phone stores the image as a file in the JPEG format, and sets a flag bit in the file to 00, to indicate that the image is a third-party image.

A specific location of the flag bit in the file in the JPEG format is not limited in embodiments of this application. It may be understood that, based on a JPEG standard, the file in the JPEG format includes a plurality of markers (markers), one marker may be understood as one field, and each marker includes two or more bytes. For example, the file in the JPEG format includes at least an SOI marker and an EOI marker. The SOI marker indicates beginning of an image, and the EOI marker indicates end of an image. In this embodiment of this application, the flag bit may be in any flag (or field) in the file in the JPEG format. For example, there are reserved markers (reserved markers) in the file in the JPEG format, and the flag bit may be stored in the reserved markers. It is assumed that the reserved markers include a plurality of fields such as 0xFF02 to 0xFFBF, and the flag bit may be stored in a field in 0xFF02 to 0xFFBF.

S201: Receive a first operation, where the first operation is used to open a first image.

For example, with reference to FIG. 3, the mobile phone displays an interface of the gallery application, and the interface includes a plurality of thumbnails. The thumbnail may be understood as a miniature version of an image stored in the gallery application. FIG. 3 is used as an example. That the mobile phone receives the first operation may be that the mobile phone receives a tap operation on a thumbnail. For example, the first operation is a tap operation on a thumbnail 301, that is, the first operation is used to open an image (namely, the first image) corresponding to the thumbnail 301.

S202: Determine whether the first image is a third-party image or a locally shot image; and if the first image is a third-party image, perform S203; or if the first image is a locally shot image, perform S206.

As described above, the mobile phone stores the image as the file in the JPEG format, the file includes a flag bit, and the flag bit indicates whether the image is a third-party image or a locally shot image. Therefore, after determining the to-be-displayed first image, the mobile phone reads a flag bit in a file corresponding to the to-be-displayed first image. If the flag bit is 01, the mobile phone determines that the first image is a locally shot image; or if the flag bit is 00, the mobile phone determines that the first image is a third-party image.

Optionally, S202 may be performed or may not be performed. Therefore, S202 in FIG. 2A is represented by dashed lines. If S202 is not performed, after determining the to-be-displayed first image, the mobile phone performs S203 regardless of whether the first image is a third-party image or a locally shot image.

S203: Determine, based on image content of the first image, whether the first image is a photographic image or a non-photographic image; and if the image is a photographic image, perform S204; or if the image is a non-photographic image, display the first image.

For example, when the mobile phone determines that the image content of the first image includes a text, an avatar, a sticker, a TV series picture, a movie picture, a short video picture, or the like, the mobile phone determines that the first image belongs to a non-photographic scene. When the mobile phone determines that the image content of the first image includes a landscape (a green plant, seawater, sky, a building, or the like), a person, an animal, or the like, the mobile phone determines that the first image is a photographic image. In this embodiment of this application, for a non-photographic image, the mobile phone may directly display the image without performing subsequent steps.

Optionally, the mobile phone may include an algorithm model, and the algorithm model may recognize whether an image is a photographic image or a non-photographic image. For example, an input parameter of the algorithm model is an image, and an output parameter is 1 or 0. When the output parameter is 1, it indicates that the input image is a photographic image. When the output parameter is 0, it indicates that the input image is a non-photographic image. In a possible implementation, when the mobile phone runs the algorithm model by using an image as the input parameter, the algorithm model invokes a database, where the database stores a large quantity of non-photographic images and photographic images; and the algorithm module compares features of the input image with those of the images in the database. If the features of the input image match those of the non-photographic images in the database, 0 is output, indicating that the input image is a non-photographic image; or if the features of the input image match those of the photographic images in the database, 1 is output, indicating that the input image is a photographic image. For example, that the features of the input image match those of the non-photographic images in the database may include that the non-photographic images in the database include the features such as a text, a sticker, a subtitle, and an avatar; and if the input image includes at least one of these features, it is determined that the features of the input image match those of the non-photographic images in the database. Similarly, that the features of the input image match those of the photographic images in the database may include that the photographic images in the database include the features such as a green plant, sky, a building, sea water, a desert, a person, and an animal; and if the input image includes at least one of these features, it is determined that the features of the input image match those of the photographic images in the database.

Optionally, S203 may be performed or may not be performed. This is not limited in embodiments of this application. Therefore, S203 in FIG. 2A is represented by dashed lines.

S204: Determine whether a highlight map of the first image and backlight brightness information exist in the mobile phone; and if the highlight map of the first image and the backlight brightness information exist, perform S205a; or if neither the highlight map of the first image nor the backlight brightness information does not exist, perform S205b.

In a possible implementation, for example, the first image is stored as a first file in the JPEG format (where a file name extension is .jpeg or .jpg). The mobile phone may query whether information (a storage path, an image size, and the like) about the highlight map of the first image and the backlight brightness information exist in the first file. As described above, the file in the JPEG format (namely, the first file) includes a plurality of markers (markers), and the information (the storage path, the image size, and the like) about the highlight map and the backlight brightness information may be in any one or more of the plurality of markers. For example, reserved markers (reserved markers) exist in the file in the JPEG format, and the information about the highlight map and the backlight brightness information may be in the reserved markers. It is assumed that the reserved markers include a plurality of fields such as 0xFF02 to 0xFFBF. The information about the highlight map and the backlight brightness information may be in a field in 0xFF02 to 0xFFBF, for example, stored in 0xFF08. Optionally, the information about the highlight map of the first image, the backlight brightness information, and a flag bit (which indicates whether the first image is a third-party image or a locally shot image) may be in a same marker or different markers. This is not limited in embodiments of this application.

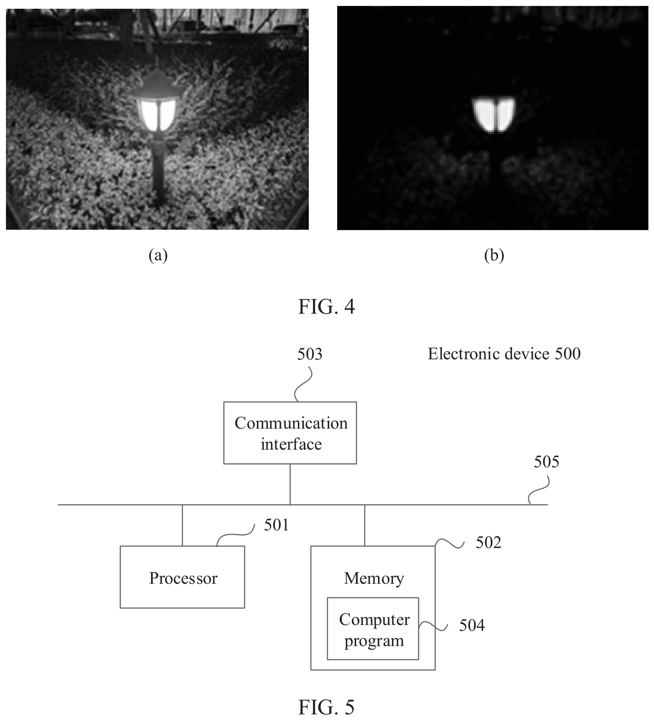

The highlight map of the first image may be understood as a grayscale image of the first image. In the grayscale image, some pixels have high pixel values (for example, RGB values), for example, the pixel values range from 230 to 255, and these pixels appear to be white or nearly white; and other pixels have low pixel values (for example, RGB values), for example, the pixel values range from 0 to 30, and these pixels appear to be black or nearly black. Pixels in the grayscale image are in a one-to-one correspondence with pixels in the first image. For example, a pixel with a high pixel value (for example, the pixel value ranges from 230 to 255) in the grayscale image corresponds to a pixel in a highlight area of the first image. In other words, a location, of the pixel with the high pixel value (for example, the pixel value ranges from 230 to 255) in the grayscale image, in the grayscale image is the same as a location, of the pixel in the highlight area of the first image, in the first image. For example, (a) in FIG. 4 is a diagram of the first image, and (b) in FIG. 4 is a diagram of the highlight map of the first image. The first image in (a) in FIG. 4 includes a light source. In the highlight map of the first image in (b) in FIG. 4, a pixel in an area in which the light source is located appears to be white or nearly white, and a pixel in another area appears to be black or nearly black. The first image in (a) in FIG. 4 is used as an example. A process in which the mobile phone obtains the highlight map of the first image shown in (b) in FIG. 4 may include: The mobile phone runs an algorithm model A by using the first image as an input parameter. The algorithm model A recognizes an object on the first image in an image semantic recognition manner, and recognizes that the first image includes the light source. The algorithm model A adjusts a pixel value of a pixel in an area in which the light source is located on the first image to a first pixel value, and adjusts a pixel value of a pixel in another area to a second pixel value, to obtain the highlight map of the first image, as shown in (b) in FIG. 4, where the first pixel value may be, for example, any value ranging from 230 to 255, and the second pixel value is, for example, any value ranging from 0 to 30. Therefore, in the highlight map of the first image, the area in which the light source is located appears to be white or nearly white (because the pixel value is adjusted to any value ranging from 230 to 255), and other areas appear to be black or nearly black (because the pixel value is adjusted to any value ranging from 0 to 30).

The backlight brightness information indicates backlight brightness of a display. The backlight brightness information may be a backlight brightness multiplier or a backlight brightness value. The backlight brightness multiplier includes 1 time (represented as x1), 2 times (represented as x2), and the like. It should be understood that a larger backlight brightness multiplier indicates higher backlight brightness of the display. The backlight brightness value is different from the backlight brightness multiplier, and the backlight brightness value is a specific value of the backlight brightness of the display. In this specification, an example in which the backlight brightness information is the backlight brightness multiplier is mainly used.

Optionally, S204 may be performed or may not be performed. Therefore, S204 in FIG. 2B is represented by dashed lines. In addition, a sequence of performing S202, S203, and S204 is not limited in embodiments of this application. For example, S204 may be performed before S203, or may be performed before S202. It should be noted that, if S204 is performed before S202, after S204 is performed, S202 and S203 may not be performed, but S205a or S205b is directly performed.

S205a: Determine the highlight area of the first image based on the highlight map of the first image.

Optionally, if the mobile phone finds, in the first file, the information (the storage path, the image size, and the like) about the highlight map of the first image in S204, the mobile phone reads the highlight map of the first image based on the storage path. After reading the highlight map of the first image, the mobile phone may determine the highlight area of the first image based on the highlight map. For example, the mobile phone determines a first pixel (one or more pixels) whose pixel value is in a first preset range (for example, a range of 230 to 255) in the highlight map, and determines a corresponding second pixel (including one or more pixels) in the first image based on the first pixel. A location of the first pixel in the highlight map is the same as a location of the second pixel in the first image, and an area in which the second pixel is located on the first image is a highlight area.

S205b: Determine the highlight area of the first image and the backlight brightness information based on the image content of the first image and/or a histogram of the first image.

**Manner A:** The highlight area of the first image and the backlight brightness information are determined based on the image content of the first image.
(1). The mobile phone determines the highlight area of the first image based on the image content of the first image.

In this embodiment of this application, the mobile phone may recognize, in an image semantic recognition manner, an object included in the first image, and determine the highlight area of the first image based on a recognition result. For example, when recognizing that the first image includes a light source, the mobile phone determines that an area in which the light source is located is a highlight area. For example, when recognizing that the first image includes a cloud, the mobile phone determines that an area in which the cloud is located is a highlight area.

In a possible manner, the mobile phone determines, by using an image semantic recognition method, whether the first image includes a preset object, and if the first image includes the preset object, determines that an area in which the preset object is located on the first image is the highlight area. The preset object may be the sun, the moon, a street lamp, a cloud, a snow scene, a wall, or the like. Optionally, the preset object may be pre-stored in the mobile phone when the mobile phone is delivered from a factory.

Optionally, the mobile phone may include the algorithm model A, and the algorithm model A is configured to determine a highlight map of an image based on image content. For example, an input parameter of the algorithm model A is an image, and an output parameter is a highlight map. For details about the highlighted map, refer to the preceding descriptions. For example, the first image is an image shown in (a) in FIG. 4. The mobile phone runs the algorithm model A by using the first image as an input parameter. The algorithm model A recognizes the first image in an image semantic recognition manner, and recognizes that the first image includes the preset object (for example, a street lamp). Therefore, the algorithm model A adjusts a pixel value of a pixel in an area in which the street lamp is located on the first image to a first pixel value, and adjusts a pixel value of a pixel in another area to a second pixel value, to obtain the highlight map of the first image, as shown in (b) in FIG. 4, where the first pixel value may be, for example, any value ranging from 230 to 255, and the second pixel value is, for example, any value ranging from 0 to 30. After obtaining the highlight map of the first image by using the algorithm model A, the mobile phone may determine the highlight area of the first image based on the highlight map. For details, refer to S205a.

In another possible manner, the preset object may be divided into a first preset object and a second preset object. For example, the first preset object includes the sun, the moon, a street lamp, and the like. The second preset object includes a cloud, a snow scene, a wall, and the like. The mobile phone may first determine whether the first image is a high dynamic range image or a low dynamic range image. For example, the mobile phone may search the first image for a brightest pixel and a darkest pixel by using a minMaxLoc function, and then determine whether a brightness difference between the brightest pixel and the darkest pixel is greater than a preset brightness difference. If the brightness difference is greater than the preset brightness difference, the mobile phone determines that the first image is a high dynamic range image; or if the brightness difference is not greater than the preset brightness difference, the mobile phone determines that the first image is a low dynamic range image. Optionally, the preset brightness difference may be set in advance. If the first image is a high dynamic range image, the mobile phone determines, by using the image semantic recognition method, whether the first image includes the first preset object, and if the first image includes the first preset object, determines that an area in which the first preset object is located on the first image is the highlight area. If the first image is a low dynamic range image, the mobile phone determines, by using the image semantic recognition method, whether the first image includes the second preset object, and if the first image includes the second preset object, determines that an area in which the second preset object is located on the first image is the highlight area.

Optionally, the mobile phone may include two algorithm models, for example, an algorithm model B and an algorithm model C. An input parameter of the algorithm model B is a high dynamic range image, and an output parameter is a highlight map. An input parameter of the algorithm model C is a low dynamic range image, and an output parameter is a highlight map. Therefore, after determining the to-be-displayed first image, the mobile phone may first determine whether the first image is a high dynamic range image or a low dynamic range image. If the first image is a high dynamic range image, calculation is performed by using the algorithm model B. If the first image is a low dynamic range image, calculation is performed by using the algorithm model C. Calculation principles of the algorithm model B and the algorithm model C are the same as those of the algorithm model A, and the only difference between the algorithm model B and the algorithm model C, and the algorithm model A lies in that the algorithm model A uses a preset object, the algorithm model B uses a first preset object, and the algorithm model C uses a second preset object. The algorithm model B is used as an example. When determining that the first image is a high dynamic range image, the mobile phone runs the algorithm model B by using the first image as an input parameter. The algorithm model B recognizes the first image by using an image semantic recognition algorithm. It is assumed that a recognition result is that the first image includes the first preset object (for example, a street lamp). Therefore, the algorithm model B adjusts a pixel value of a pixel in an area in which the street lamp is located on the first image to a first pixel value (for example, any value ranging from 230 to 255), and adjusts a pixel value of a pixel in another area to a second pixel value (for example, any value ranging from 0 to 30), to obtain a highlight map of the first image. After obtaining the highlight map of the first image by using the algorithm model B, the mobile phone determines the highlight area of the first image based on the highlight map of the first image. For details, refer to S205a.

Optionally, after obtaining the highlight map of the first image, the mobile phone may store the highlight map. Next time the mobile phone detects that a user needs to open the first image, the mobile phone determines, by using S204, that the highlight map of the first image is stored in the mobile phone, reads the highlight map of the first image, and then determines the highlight area of the first image based on the highlight map (that is, S205a), rather than determines the highlight area of the first image based on the image content and/or the histogram. For example, after storing the highlight map of the first image in a memory, the mobile phone may write information such as a storage path and an image size of the highlight map into a file in a JPEG format of the first image. For example, the file in the JPEG format includes a plurality of markers (markers), and the information (the storage path, the image size, and the like) about the highlight map may be in any one of the plurality of markers. For example, the information about the highlight map may be in reserved markers.

(2) The mobile phone determines the backlight brightness information based on the image content of the first image.

In this embodiment of this application, the mobile phone may recognize, in the image semantic recognition manner, an environment in which the first image is located, and determine the backlight brightness information based on a recognition result. The environment in which the first image is located is a shooting environment reflected by the first image, for example, an indoor environment, an outdoor environment, a daytime environment, or a nighttime environment.

As described above, the backlight brightness information may be the backlight brightness multiplier or the backlight brightness value. For example, the backlight brightness information is the backlight brightness multiplier. If the mobile phone recognizes that the environment in which the first image is located is a daytime environment and/or an indoor environment, the mobile phone determines that the backlight brightness multiplier is a multiplier A. If the mobile phone recognizes that the environment in which the first image is located is a nighttime environment and/or an outdoor environment, the mobile phone determines that the backlight brightness multiplier is a multiplier B. The multiplier A is greater than the multiplier B. For example, the multiplier A is 4 and the multiplier B is 3. In a possible implementation, the mobile phone may include an algorithm model D. An input parameter of the algorithm model D is an image, and an output parameter is a backlight brightness multiplier. For example, the first image is an image shown in (a) in FIG. 4. The mobile phone runs the algorithm model D by using the first image as an input parameter. The algorithm model D recognizes, in the image semantic recognition manner, the environment in which the first image is located. Different environments are represented by different environmental parameters. For example, if the environment is a daytime environment, a corresponding environmental parameter is 00; if the environment is a nighttime environment, a corresponding environmental parameter is 11; if the environment is an indoor environment, a corresponding environmental parameter is 01; or if the environment is an outdoor environment, a corresponding environmental parameter is 10. After determining the environmental parameter of the first image, the algorithm model D determines, based on a pre-stored correspondence between an environmental parameter and a backlight brightness multiplier, a backlight brightness multiplier corresponding to the environmental parameter of the first image, and outputs the backlight brightness multiplier.

Certainly, the environment in which the image is located may be further divided. For example, nighttime may be subdivided into late night, evening, and the like. If the mobile phone recognizes that the environment in which the first image is located is evening, the mobile phone determines that the backlight brightness multiplier is a multiplier C. If the environment in which the first image is located is late night, the backlight brightness multiplier is a multiplier D. The multiplier C is greater than the multiplier D.

Optionally, in this embodiment of this application, after determining the backlight brightness information, the mobile phone may store the backlight brightness information. Next time the mobile phone detects that the user needs to open the first image, the mobile phone determines, by using S204, that the backlight brightness information is stored in the mobile phone, and reads the backlight brightness information, rather than determines the backlight brightness information based on the image content of the first image and/or the histogram of the first image. Optionally, the mobile phone may store the backlight brightness information in a file in a JPEG format corresponding to the first image. For example, the file in the JPEG format includes a plurality of markers (markers), and the backlight brightness information may be in any one of the plurality of markers. For example, reserved markers (reserved markers) exist in the file in the JPEG format, and the backlight brightness information may be stored in the reserved markers.

**Manner B:** The highlight area of the first image and the backlight brightness information are determined based on the histogram of the first image.

For ease of understanding, the histogram is first briefly described. The histogram refers to collecting statistics on a quantity of pixels whose pixel values range from 0 to 255 in the image. For example, statistics on a quantity of pixels whose pixel values are 0 in the image and a quantity of pixels whose pixels are 255 in the image are collected, and then a statistical result is marked in a coordinate system to form a histogram. A horizontal coordinate of the coordinate system indicates a pixel value, and a vertical coordinate indicates a quantity of pixels. For example, if there are 100 pixels whose pixel values are 255 in an image, a point is marked in the coordinate system, and a horizontal coordinate of the point is 255 and a vertical coordinate of the point is 100. Histograms include a global histogram and a local histogram. The difference is that the global histogram requires collecting statistics on an entire image, and the local histogram requires dividing an image into a plurality of areas and collecting statistics on each area. It is assumed that an image is divided into 6*6 areas. Statistics on a quantity of pixels whose pixel values range from 0 to 255 in an area in the first row and the first column and on a quantity of pixels whose pixel values range from 0 to 255 in an area in the first row and the second column are collected, and so on.
(1) The mobile phone determines the highlight area of the first image based on the histogram of the first image.

For example, the mobile phone divides the first image into N areas, where N is a positive integer, and a specific value of N may be preset. The mobile phone collects statistics on a quantity of pixels whose pixel values range from 0 to 255 in each of the N areas, to obtain a local histogram of the first image. The mobile phone determines M areas in the N areas based on the local histogram, where M is a positive integer less than or equal to N, and each of the M areas satisfies that an average pixel value is greater than a threshold 1 (for example, 230) and/or a quantity of pixels whose pixel values are greater than the threshold 1 exceeds a preset quantity W₁, for example, pixel values of at least half of pixels in each area are greater than the threshold 1 (for example, 230). After determining the M areas, the mobile phone may determine the M areas as the highlight area of the first image.

Optionally, in different cases, values of the threshold 1 may be different. For example, the mobile phone may determine whether the first image is a high dynamic range image or a low dynamic range image. If the first image is a high dynamic range image, the value of the threshold 1 is X1. If the first image is a low dynamic range image, the value of the threshold 1 is X2, where X1 may be less than X2. This can be attributed to the following reasons. Because a brightness difference of an object in a low dynamic range image is not obvious, a highlight area can be accurately determined only when the value of the threshold 1 is large. However, due to a large brightness difference in a high dynamic range image, a background is generally dark. In this case, a highlight area can be determined without a large value of the threshold 1. Optionally, the mobile phone may search the first image for a brightest pixel and a darkest pixel by using a minMaxLoc function, and then determine whether a brightness difference between the brightest pixel and the darkest pixel is greater than a preset brightness difference. If the brightness difference is greater than the preset brightness difference, the mobile phone determines that the first image is a high dynamic range image; or if the brightness difference is not greater than the preset brightness difference, the mobile phone determines that the first image is a low dynamic range image.

In another possible manner, after determining the M areas, the mobile phone may determine K areas in the M areas based on a global histogram, where K is a positive integer less than or equal to M, and determine the K areas as the highlight area. A possible manner in which the mobile phone determines the K areas in the M areas based on the global histogram is: performing the following procedure on each of the M areas: 1. The mobile phone determines that a quantity of pixels whose pixel values are greater than the threshold 1 in the area is S1. 2. The mobile phone determines, based on the global histogram, that a total quantity of pixels whose pixel values are greater than the threshold 1 in the entire first image is S2. 3. The mobile phone determines whether S1/S2 is greater than a threshold 2 (for example, 5%); and if S1/S2 is greater than the threshold 2, determines that the area meets the condition; or if S1/S2 is not greater than the threshold 2, determines that the area does not meet the condition. The foregoing procedure is performed once on each of the M areas, and the K areas that meet the condition are determined in the M areas.

Optionally, in different cases, values of the threshold 2 may be different. For example, the mobile phone may determine whether the first image is a high dynamic range image or a low dynamic range image. If the first image is a high dynamic range image, the value of the threshold 2 is X3. If the first image is a low dynamic range image, the value of the threshold 2 is X4, where X3 may be less than X4. For example, for a high dynamic range image, the threshold 2 may be a value within 5% to 10%, and for a low dynamic range image, the threshold 2 may be a value within 50% to 60%. This can be attributed to the following reasons. In a normal case, because a quantity of pixels in a highlight area (for example, an area in which a light source is located) of the high dynamic range image is small, for example, accounts for 5% to 10% of a total quantity of pixels in the entire image, the value of the threshold 2 is small. However, because a quantity of pixels in a highlight area (for example, an area in which a cloud or snow scene is located) of the low dynamic range image is large, for example, accounts for 50% to 60% of a total quantity of pixels in the entire image, the value of the threshold 2 is large.

Optionally, the value of the threshold 2 may be related to a value of N. For example, when the value of N is large, that is, an image is divided into more areas, there are fewer pixels in each area. In this case, S1 is reduced, and S1/S2 is reduced (S2 is fixed). Therefore, the value of the threshold 2 is small. On the contrary, a smaller value of N indicates that an image is divided into fewer areas and there are more pixels in each area. In this case, S1 is increased, and S1/S2 is increased (S2 is fixed). Therefore, the value of the threshold 2 is large.

(2) The mobile phone determines the backlight brightness information based on the histogram of the first image.

For example, if the mobile phone determines, based on the global histogram after determining a global histogram of the first image, that a quantity of pixels whose pixel values are greater than a threshold 3 (for example, 230) in the first image exceeds a preset quantity W₂ and/or a ratio of the quantity of pixels whose pixel values are greater than the threshold 3 (for example, 230) in the first image to a total quantity of pixels in the first image exceeds a preset ratio P₁, it indicates that the first image is brighter as a whole. In this case, the backlight brightness multiplier is determined as a multiplier E. As described above, the backlight brightness information may be the backlight brightness multiplier or the backlight brightness value. Herein, that the backlight brightness information is the backlight brightness multiplier is used as an example. For another example, if the mobile phone determines, based on a global histogram, that a quantity of pixels whose pixel values are less than a threshold 4 (for example, 30) in the first image exceeds a preset quantity W₃ and/or a ratio of the quantity of pixels whose pixel values are less than the threshold 4 (for example, 30) in the first image to a total quantity of pixels in the first image exceeds a preset ratio P₂, it indicates that the first image is darker as a whole. In this case, the backlight brightness multiplier is determined as a multiplier F. The multiplier E is greater than the multiplier F. Optionally, the threshold 3 may be greater than the threshold 4. For example, the threshold 3 is any value ranging from 230 to 255, and the threshold 4 is any value ranging from 0 to 30. Specific values of the preset quantity W₂, the preset quantity W₃, the preset ratio P₁, and the preset ratio P₂ are not limited in embodiments of this application.

S206: Determine a highlight area of the first image and backlight brightness information based on Exif information of the first image.

It should be noted that, when the mobile phone shoots an image by using the local camera, the mobile phone stores parameters used for shooting the image. The parameters include, for example, exposure information, an f-number, a flash, a lens focal length, a depth of field, and a quantity of shutter times. These parameters form exchangeable image file format (Exchangeable image file format, Exif) information and the Exif information is stored in the mobile phone. Therefore, for a locally shot image, the mobile phone may determine a highlight area of the image and backlight brightness information based on Exif information of the image. For a third-party image, because the third-party image is not locally shot by the mobile phone, the mobile phone does not have Exif information corresponding to the third-party image. Therefore, a highlight area of the third-party image and backlight brightness information are determined based on image content or a histogram.

Optionally, a manner in which the mobile phone determines the highlight area of the first image based on the Exif information of the first image may be that the mobile phone determines, as the highlight area based on exposure information, an area with high exposure intensity in the first image.

Optionally, a manner in which the mobile phone determines the backlight brightness information based on the Exif information of the first image may be that the mobile phone determines the backlight brightness information based on the exposure information. For example, the mobile phone stores a correspondence between exposure information and backlight brightness information, and determines the backlight brightness information based on exposure information in the Exif information and the correspondence.

S207: Reduce brightness of a non-highlight area of the first image and keep brightness of the highlight area unchanged, to obtain a second image, where the non-highlight area is an area of the first image other than the highlight area.

Optionally, in a possible implementation of S207, the mobile phone reduces a grayscale value of each pixel in the non-highlight area of the first image, and keeps a grayscale value of each pixel in the highlight area unchanged, to obtain the second image. Optionally, before reducing the grayscale value of the pixel in the non-highlight area, the mobile phone may first determine how much the grayscale value is reduced, that is, a grayscale change value Δ. In a possible manner, the mobile phone determines the grayscale change value Δ based on the backlight brightness information. In other words, the grayscale change value Δ is related to the backlight brightness information. For example, the backlight brightness information is a backlight brightness multiplier. A process in which the mobile phone determines the grayscale change value Δ based on the backlight brightness multiplier includes: The mobile phone stores a correspondence between a backlight brightness multiplier and a grayscale change value Δ, and determines, based on the correspondence, a grayscale change value Δ corresponding to a backlight brightness multiplier. For example, the correspondence is pre-stored in the mobile phone. For the correspondence, refer to the following table:

| Backlight brightness multiplier of a display | Grayscale change value Δ of an image |
|---|---|
| x1 | 10 |
| x2 | 20 |

It is assumed that the backlight brightness multiplier of the display determined by the mobile phone is x1. In this case, the grayscale value of each pixel in the non-highlight area of the first image is reduced by 10 based on the foregoing table. It is assumed that the backlight brightness multiplier of the display determined by the mobile phone is x2. In this case, the grayscale value of each pixel in the non-highlight area of the first image is reduced by 20 based on the foregoing table.

Therefore, in this embodiment of this application, a grayscale change value Δ of the non-highlight area of the first image is related to the backlight brightness information (for example, the backlight brightness multiplier), and a larger backlight brightness multiplier indicates a larger grayscale change value Δ of the non-highlight area. This can be attributed to the following reasons. To obtain higher brightness of a highlight area of an image when the mobile phone displays the image, backlight brightness of the display needs to be improved. However, after the backlight brightness of the display is improved, overall brightness of the first image is improved, that is, brightness of both the highlight area and the non-highlight area is improved, and consequently, a brightness contrast (namely, a dynamic range) between the highlight area and the non-highlight area cannot be enhanced. Therefore, in this embodiment of this application, before displaying an image, the mobile phone first reduces a grayscale value of a pixel in a non-highlight area of the image, and keeps a grayscale value of a pixel in a highlight area unchanged, to obtain a new image. Then, the mobile phone adjusts backlight brightness of the display based on a backlight brightness multiplier, and displays the new image on the display. The grayscale change value Δ of the non-highlight area is determined based on the backlight brightness multiplier, and a larger backlight brightness multiplier indicates a larger grayscale change value Δ. In the foregoing table, for example, the backlight brightness multiplier is x1, and the grayscale change value Δ is 10. When a grayscale value of the non-highlight area of the image is reduced by 10, the non-highlight area becomes dark. In addition, when the backlight brightness multiplier of the display is x1, backlight brightness of the display can compensate for darkening of the non-highlight area. In this way, when the mobile phone displays the new image, a non-highlight area of the new image may be restored to original brightness. Although the non-highlight area becomes dark because a grayscale value of the non-highlight area of the new image is reduced, the backlight brightness of the display compensates for darkening of the non-highlight area. In addition, because the grayscale value of the highlight area of the new image remains unchanged, when the new image is displayed on the display, the highlight area of the new image is brighter due to a function of the backlight brightness of the display. In this way, when the new image is displayed on the display, a brightness contrast between the highlight area and the non-highlight area is enhanced, that is, a dynamic range of image display is improved.

As described above, if the mobile phone recognizes that an environment in which the first image is located is a daytime environment and/or an indoor environment, the mobile phone determines that the backlight brightness multiplier is a multiplier A. If the mobile phone recognizes that an environment in which the first image is located is a nighttime environment and/or an outdoor environment, the mobile phone determines that the backlight brightness multiplier is a multiplier B. The multiplier A is greater than the multiplier B. This can be attributed to the following reasons. In this embodiment of this application, the mobile phone needs to first reduce brightness of a non-highlight area of an image (that is, reduce a grayscale value of a pixel in a non-highlight area). A pixel change value Δ of the non-highlight area is positively correlated with the backlight brightness multiplier, that is, the more the brightness of the non-highlight area is reduced, the greater the backlight brightness multiplier is. Therefore, if an environment in which an image is located is a nighttime environment (for example, (a) in FIG. 4), because details of the image are unclear, when brightness of a non-highlight area is excessively reduced, more details are likely to be lost. In this case, if the brightness of the non-highlight area is reduced less (that is, a grayscale change value Δ is smaller), a corresponding backlight brightness multiplier may be smaller. If an environment in which an image is located is a daytime environment, because the image has many details, when brightness of a non-highlight area is reduced much, details are not likely to be lost. In this case, if the brightness of the non-highlight area is reduced less (that is, a grayscale change value Δ is larger), a corresponding backlight brightness multiplier may be larger. Therefore, if an image is during the nighttime, a grayscale change value Δ is small and a corresponding backlight brightness multiplier is small; or if an image is during the daytime, a grayscale change value Δ is large and a corresponding backlight brightness multiplier is large.

In another possible implementation, the mobile phone reduces a grayscale value of each pixel in the first image (for example, reduces a grayscale change value Δ) to obtain a third image, and the mobile phone splices an image block in the highlight area of the first image and an image block in a first area of the third image to obtain a second image. A location of the first area of the third image is the same as a location of the non-highlight area of the first image.

S208: Adjust the backlight brightness of the display based on the backlight brightness information.

As described above, the backlight brightness information may be the backlight brightness multiplier or the backlight brightness value. That the backlight brightness information is the backlight brightness multiplier is used as an example. For example, if the backlight brightness multiplier is x2 and a current multiplier of the display is x1, the backlight brightness multiplier of the display is increased to x2.

Optionally, in an implementation of S208, the mobile phone includes a microcontroller unit (Microcontroller Unit, MCU), and the MCU is responsible for adjusting brightness of a backlight (backlight) source of the display. The backlight source is a light source located behind the display, namely, an auxiliary light-emitting device. A light-emitting effect of the backlight source affects a visual effect of the display. Details about the backlight source are not described in this application. The MCU may adjust the brightness of the backlight source based on the backlight brightness information. Optionally, an example in which a procedure shown in FIG. 2A and FIG. 2B is performed by a processor (for example, a central processing unit) in the mobile phone is used. After performing S207, the processor may send an instruction to the MCU, where the instruction includes backlight brightness information. After receiving the instruction, the MCU adjusts brightness of a backlight source based on the backlight brightness information.

S209: Display the second image on the display.

Compared with the first image, in the second image, brightness of a highlight area remains unchanged, and a non-highlight area becomes dark (a grayscale value is reduced by Δ). Therefore, after the mobile phone adjusts the backlight brightness of the display, when the second image is displayed on the display, the backlight brightness of the display compensates for darkening of the non-highlight area. In addition, because the grayscale value of the highlight area does not change, the backlight brightness of the display makes the highlight area brighter. In this way, when the second image is displayed on the display, a contrast between the highlight area and the non-highlight area is enhanced, that is, a dynamic range is improved.

Optionally, in this embodiment of this application, a switch may be further disposed in the mobile phone. When the switch is in an enabled state, the mobile phone performs display by using the image display method provided in this embodiment of this application, that is, the mobile phone performs the procedure in FIG. 2A and FIG. 2B. When the switch is in a disabled state, in one manner, the mobile phone directly displays the first image when receiving an operation used to open the first image, and does not need to perform the procedure in FIG. 2A and FIG. 2B. Alternatively, the mobile phone may perform some procedures in FIG. 2A and FIG. 2B. For example, after receiving an operation used to open the first image, the mobile phone determines whether the first image is a third-party image or a locally shot image. If the first image is a third-party image, the first image is directly displayed; or if the first image is a locally shot image, the first image is displayed in a manner of S206 to S209.

FIG. 5 is a diagram of a structure of an electronic device 500 according to an embodiment of this application. The electronic device 500 may be the mobile phone described above. As shown in FIG. 5, the electronic device 500 may include one or more processors 501, one or more memories 502, a communication interface 503, and one or more computer programs 504. The foregoing components may be connected to each other through one or more communication buses 505. The one or more computer programs 504 are stored in the memory 502 and are configured to be executed by the one or more processors 501, and the one or more computer programs 504 include instructions. For example, when the electronic device 500 is the mobile phone described above, the instructions may be used to perform related steps of the mobile phone in the foregoing corresponding embodiment, for example, the steps of the mobile phone in the embodiment shown in FIG. 2A and FIG. 2B. The communication interface 503 is configured to implement communication between the electronic device 500 and another device. For example, the communication interface may be a transceiver.

In the foregoing embodiments provided in this application, the method provided in embodiments of this application is described from the perspective in which the electronic device (for example, the mobile phone) is used as an execution body. To implement functions in the foregoing method provided in embodiments of this application, the electronic device may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, or other programmable apparatuses. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk drive, or a magnetic tape), an optical medium (for example, DVD), a semiconductor medium (for example, a solid-state drive Solid State Disk (SSD)), or the like. In a case in which no conflict occurs, the solutions in the foregoing embodiments may be combined for use.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clearly that a person skilled in the art can make various modifications and variations to this application without departing from the scope of this application. This application is intended to cover these modifications and variations of this application provided that they fall within the protection scope defined by the following claims and their equivalent technologies.

## Claims

1. An image display method, applied to an electronic device, wherein the electronic device has a display; and the method comprises:
determining a to-be-displayed first image;
determining a highlight area of the first image and backlight brightness information of the display based on image content of the first image or a histogram of the first image, wherein the highlight area is an area that is of the first image and whose brightness value is greater than a first threshold;
reducing brightness of a non-highlight area of the first image and keeping brightness of the highlight area unchanged, to obtain a second image, wherein the non-highlight area is an area of the first image other than the highlight area;
adjusting backlight brightness of the display based on the backlight brightness information; and
displaying the second image on the display.

2. The method according to claim 1, wherein determining the highlight area of the first image based on the image content of the first image comprises:
determining, based on the image content of the first image, whether the first image comprises a preset object; and if the first image comprises the preset object, determining that an area in which the preset object is located on the first image is the highlight area.

3. The method according to claim 1, wherein determining the highlight area of the first image based on the image content of the first image comprises:
running a first algorithm model by using the first image as an input parameter, to obtain a highlight map of the first image, wherein the first algorithm model is configured to: when recognizing that the first image comprises a preset object, adjust a pixel value of a pixel in an area in which the preset object is located on the first image to a first pixel value, and adjust a pixel value of a pixel in another area to a second pixel value, to obtain the highlight map, wherein the first pixel value is less than the second pixel value; and
determining the highlight area of the first image based on the highlight map.

4. The method according to claim 3, wherein determining the highlight area of the first image based on the highlight map comprises:
determining a first pixel whose pixel value is the first pixel value in the highlight map;
determining a second pixel in the first image based on the first pixel, wherein a location of the second pixel in the first image is the same as a location of the first pixel in the highlight map; and
determining an area in which the second pixel is located as the highlight area.

5. The method according to claim 1, wherein determining the highlight area of the first image based on the histogram of the first image comprises:
dividing the first image into N areas, and determining a local histogram of each of the N areas, wherein N is a positive integer;
determining M areas in the N areas based on the local histogram, wherein M is a positive integer less than or equal to N, and each of the M areas satisfies that an average pixel value is greater than a second threshold and/or a quantity of pixels whose pixel values are greater than the second threshold exceeds a preset quantity; and
determining the M areas as the highlight area.

6. The method according to claim 5, wherein before determining the M areas as the highlight area, the method further comprises:
determining K areas in the M areas based on a global histogram of the first image, wherein K is a positive integer less than or equal to M, each of the K areas satisfies that a ratio of S1 to S2 is greater than a first ratio, S1 is a quantity of pixels whose pixel values are greater than the second threshold in each area, and S2 is a quantity of all pixels whose pixel values are greater than the second threshold in the first image; and
determining the M areas as the highlight area comprises:
determining the K areas as the highlight area of the first image.

7. The method according to claim 5 or 6, wherein
the first image is a high dynamic range image, and a value of the second threshold is a first value; or
the first image is a low dynamic range image, the value of the second threshold is a second value, and the first value is less than the second value.

8. The method according to claim 6, wherein
the first image is a high dynamic range image, and a value of the first ratio is a third value; or
the first image is a low dynamic range image, a value of the first ratio is a fourth value, and the third value is less than the fourth value.

9. The method according to any one of claims 1 to 8, wherein determining the backlight brightness information of the display based on the image content of the first image comprises:
determining, based on the image content of the first image, an environment in which the first image is located; and
determining the backlight brightness information based on the environment.

10. The method according to claim 9, wherein the backlight brightness information comprises a backlight brightness multiplier; and
when the environment is an outdoor environment or a daytime environment, determining the backlight brightness multiplier as a first multiplier; or
when the environment is an indoor environment or a nighttime environment, determining the backlight brightness multiplier as a second multiplier, wherein the first multiplier is greater than the second multiplier.

11. The method according to any one of claims 1 to 8, wherein determining the backlight brightness information of the display based on the histogram of the first image comprises:
determining, based on the global histogram of the first image, a second ratio of a quantity of pixels whose pixel values are less than a third threshold in the first image to a total quantity of pixels in the first image, and determining the backlight brightness information based on the second ratio;
or
determining, based on the global histogram of the first image, a third ratio of a quantity of pixels whose pixel values are greater than a fourth threshold in the first image to the total quantity of pixels in the first image, and determining the backlight brightness information based on the third ratio.

12. The method according to any one of claims 1 to 11, wherein before reducing the brightness of the non-highlight area of the first image, the method further comprises:
determining a grayscale change value Δ based on the backlight brightness information; and
subtracting the grayscale change value Δ from a grayscale value of each pixel in the non-highlight area.

13. The method according to claim 12, wherein determining the grayscale change value Δ based on the backlight brightness information comprises:
determining, based on the backlight brightness information and a correspondence between backlight brightness information and a grayscale change value, the grayscale change value Δ corresponding to the backlight brightness information.

14. The method according to any one of claims 1 to 13, wherein before determining the highlight area of the first image and the backlight brightness information of the display based on the image content of the first image or the histogram of the first image, the method further comprises:
determining that the first image is a third-party image, wherein the third-party image is not an image locally shot by the electronic device.

15. The method according to claim 14, wherein determining that the first image is a third-party image comprises:
reading a flag bit in a first file, and determining, based on the flag bit, that the first image is a third-party image, wherein
the first file is a file formed by storing the first image by the electronic device based on a first image format, and the flag bit indicates that the first image is a third-party image or a locally shot image.

16. The method according to any one of claims 1 to 15, wherein before determining the highlight area of the first image and the backlight brightness information of the display based on the image content of the first image or the histogram of the first image, the method further comprises:
determining, based on the image content of the first image, that the first image is a photographic image, wherein the photographic image is an image that comprises at least one of a landscape, a person, and an animal.

17. The method according to claim 16, wherein the method further comprises:
when determining, based on the image content of the first image, that the first image is not a photographic image, displaying the first image on the display.

18. The method according to claim 3, wherein the method further comprises:
storing the highlight map of the first image and the backlight brightness information.

19. The method according to claim 18, wherein the method further comprises:
canceling display of the second image on the display in response to a first operation;
reading the highlight map and the backlight brightness information when receiving an operation used to open the first image again;
determining the highlight area of the first image based on the highlight map;
reducing the brightness of the non-highlight area of the first image and keeping the brightness of the highlight area unchanged, to obtain a third image, wherein the non-highlight area is the area of the first image other than the highlight area;
adjusting the backlight brightness of the display based on the backlight brightness information; and
displaying the third image on the display.

20. The method according to any one of claims 1 to 19, wherein before determining the highlight area of the first image and the backlight brightness information of the display based on the image content of the first image or the histogram of the first image, the method further comprises:
determining that the highlight map of the first image and the backlight brightness information do not exist in the electronic device, wherein the highlight map is a grayscale image of the first image, and a pixel whose pixel value is within a first preset range in the grayscale image corresponds to a pixel in the highlight area of the first image.

21. An electronic device, comprising:
a processor, a memory, and one or more programs, wherein
the one or more programs are stored in the memory, the one or more programs comprise instructions, and when the instructions are executed by the processor, the electronic device is enabled to perform the steps of the method according to any one of claims 1 to 20.

22. A computer-readable storage medium, wherein the computer-readable storage medium is configured to store a computer program, and when the computer program is run on a computer, the computer is enabled to perform the method according to any one of claims 1 to 20.

23. A computer program product, comprising a computer program, wherein when the computer program is run on a computer, the computer is enabled to perform the method according to any one of claims 1 to 20.
